# FASCICULE DE BREVET EUROPEEN

(11) **EP 1 675 740 B1**
(45) Date de publication et mention de la délivrance du brevet: **24.03.2010**
(21) Numéro de dépôt: 04787487.0
(22) Date de dépôt: 29.09.2004
(51) Int. Cl.: B60J 7/22

(54) **DISPOSITIF DE DEFLEXION DE AIR POUR VEHICULE A TOIT OUVRANT**
LUFTABLENKVORRICHTUNG FÜR EIN AUTO MIT SCHIEBEDACH
AIR DEFLECTING DEVICE FOR A SLIDING ROOF CAR

(30) Priorité: 20.10.2003 FR 0312248
(43) Date de publication de la demande: 05.07.2006
(73) Titulaire: Société Européenne de Brevets Automobiles, 75011 Paris 11 (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Pichat, Thierry
(86) Numéro de dépôt international: PCT/FR2004/002472
(87) Numéro de publication internationale: WO 2005/049355

(56) Documents cités:
- EP-A- 0 421 115
- US-A- 5 601 330
- PATENT ABSTRACTS OF JAPAN vol. 0100, no. 06 (M-445), 11 janvier 1986 (1986-01-11) & JP 60 169322 A (NISSAN JIDOSHA KK), 2 septembre 1985 (1985-09-02)

## Description

L'invention concerne, de façon générale, les techniques de carrossage des véhicules, et en particulier des véhicules automobiles.

Plus précisément, l'invention concerne un dispositif de déflexion d'air pour un véhicule dont l'habitacle est sélectivement recouvert par un toit ouvrant formé d'au moins un premier élément de toit surplombant l'habitacle dans une configuration fermée du toit, et partiellement ou totalement escamoté vers l'arrière du véhicule dans une configuration escamotée (c'est à dire ouverte) du toit, ce dispositif comprenant :
- un déflecteur disposé entre une traverse de baie du véhicule et le premier élément de toit, et ce déflecteur adoptant sélectivement une position d'obturation dans laquelle il participe à la constitution du toit dans sa configuration fermée, et une position d'ouverture, qu'il adopte dans la configuration escamotée du toit et dans laquelle il est incliné vers le haut et vers l'arrière du véhicule par rotation autour d'un axe de pivotement horizontal (Y) disposé vers un bord avant de ce déflecteur,
- des glissières longitudinales droite et gauche disposées symétriquement à droite et à gauche d'un plan longitudinal médian (M) du véhicule.

Un tel dispositif est connu notamment de US-A- 5 601 330.

En général, les véhicules à toit ouvrant ou escamotable comprennent des brancards fixes et plusieurs éléments de toit centraux mobiles depuis une position dans laquelle ils recouvrent ensemble l'habitacle du véhicule jusque dans une position rétractée, sensiblement verticale ou horizontale, dans laquelle ils sont repliés dans le coffre arrière du véhicule.

Il est par ailleurs connu d'utiliser, sur les véhicules à toit ouvrant ou escamotable, des déflecteurs de vent qui sont situés sur le bord arrière de la traverse de baie et qui, lorsque le toit est en position escamotée, se déploient pour dévier le flux d'air et augmenter le confort des passagers en matière d'aérodynamisme.

Cependant, lorsqu'un tel véhicule est équipé d'un toit escamotable ou d'éléments de toit centraux à plusieurs configurations de rangement, il est nécessaire de modifier, en fonction de la vitesse du véhicule, et de la position des éléments de toit qui peuvent éventuellement être superposés, l'inclinaison du déflecteur afin réduire les retours d'air et les perturbations dans l'habitacle du véhicule.

Dans ce contexte, la présente invention a pour but de proposer un dispositif de déflexion d'air qui permette de diminuer les retours de flux d'air dans l'habitacle quelles que soient la configuration et la vitesse du véhicule, sans requérir un réglage d'inclinaison du déflecteur. Les inconvénients de US-A-5 601 330 sont évités.

A cette fin, le dispositif de l'invention, par ailleurs conforme à la définition générique qu'en donne le préambule ci-dessus, est en particulier caractérisé en ce qu'en position d'ouverture le déflecteur (1) adopte plusieurs positions de translation suivant une direction longitudinale du véhicule, par déplacement le long desdites glissières longitudinales; par l'intermédiaire d'un chariot équipé d'organes de déplacement et supportant ledit déflecteur à rotation autour de l'axe de pivotement horizontal, les organes de déplacement liant le chariot aux glissières et permettant sélectivement ledit déplacement longitudinal de ce chariot, et donc du déflecteur, le long des glissières.

Dans le mode de réalisation préféré de l'invention, le chariot comprend des bras droit et gauche recevant respectivement des pivots droit et gauche du déflecteur à rotation autour de l'axe de pivotement.

Les organes de déplacement comprennent par exemple des patins droit et gauche, respectivement guidés par les glissières droite et gauche et solidaires des bras droit et gauche du chariot, le chariot comprenant par ailleurs une traverse de liaison qui relie les patins droit et gauche entre eux.

Le dispositif de l'invention comprend avantageusement au moins un organe élastique soumis à une précontrainte variable et sollicitant le déflecteur en rotation autour de l'axe de pivotement vers sa position d'ouverture, ainsi que des organes de maintien liés au premier élément de toit et qui, dans la configuration fermée du toit, placent le déflecteur dans sa position d'obturation et soumettent l'organe élastique à sa précontrainte maximale.

Il est par exemple possible de prévoir que le déflecteur comporte des voiles longitudinaux droit et gauche, respectivement disposés verticalement à droite et à gauche du plan médian du véhicule et portant des cames droite et gauche respectives et symétriques par rapport au plan médian, que chacune de ces cames définisse un trajet présentant une extrémité distale relativement éloignée de l'axe de pivotement et une extrémité proximale relativement proche de l'axe de pivotement, ce trajet se rapprochant continûment de l'axe de pivotement depuis son extrémité distale jusqu'à son extrémité proximale, et que le dispositif de l'invention comprenne également des organes de liaison reliant les cames au chariot pour définir la position du déflecteur.

Dans un mode de réalisation simple et facile à fabriquer, les cames droite et gauche sont constituées par des lumières respectivement pratiquées dans les voiles longitudinaux droit et gauche du déflecteur.

Les organes de liaison reliant les cames au chariot peuvent comprendre des biellettes droite et gauche, symétriques l'une de l'autre par rapport au plan médian, chaque biellette présentant une première extrémité articulée sur l'un des organes de déplacement et une deuxième extrémité guidée par l'une des cames, auquel cas les organes de maintien, dans la position d'obturation du déflecteur, peuvent appuyer sur les biellettes droite et gauche dans un sens propre à maintenir leurs deuxièmes extrémités respectives à proximité relative des extrémités proximales respectives des trajets définis par les cames droite et gauche respectives.

Au lieu de ne comprendre qu'un seul organe élastique, le dispositif de l'invention peut plus avantageusement comprendre des organes élastiques droit et gauche, tels que des lames ressorts, sollicitant respectivement les biellettes droite et gauche dans un sens propre à maintenir leurs deuxièmes extrémités respectives à distance relative des extrémités proximales respectives des trajets définis par les cames droite et gauche respectives, et à placer corrélativement le déflecteur dans sa position d'ouverture.A cet égard, les biellettes inclinées par rapport aux cames participent au maintien en position inclinée du déflecteur (position dite d'ouverture), empêchant sa rotation autour de l'axe Y, un calcul approprié de l'angle d'inclinaison autorisant un possible retour du déflecteur en position escamotée (position dite d'obturation).

Les organes de maintien comprennent par exemple des barres de maintien droite et gauche, solidaires du premier élément de toit et propres à appuyer respectivement sur les biellettes droite et gauche dans la configuration fermée du toit.

Enfin, les pivots droit et gauche du déflecteur peuvent être portés par des pattes droite et gauche faisant saillie de la face interne de ce déflecteur, ces pattes étant de préférence plus proches du plan médian que les voiles longitudinaux droit et gauche du déflecteur.

Un véhicule équipé du dispositif de déflexion d'air de l'invention est bien entendu également ici visé, ainsi qu'un procédé de déflexion d'air, par le déflecteur déjà présenté, sur donc un véhicule dont l'habitacle est sélectivement recouvert au moins par ledit premier élément du toit ouvrant (ou élément avant de toit), avec en particulier pour particularité que:
- lorsque le toit est fermé, ledit élément de toit avant adopte une position sensiblement horizontale et le déflecteur est maintenu en position d'obturation,
- lorsque cet élément de toit avant s'ouvre en direction de la configuration escamotée, par mouvement vers l'arrière du véhicule, le déflecteur pivote autour dudit axe horizontal (Y) jusque dans sa position d'ouverture et, après avoir atteint cette position, est entraîné longitudinalement en translation vers l'arrière du véhicule, jusqu'à adopter une position favorable à une déflexion du flux d'air.

D'autres caractéristiques et avantages de invention ressortiront clairement de la description qui en est faite ci-après, à titre indicatif et nullement limitatif, en référence aux dessins annexés, dans lesquels :
- la figure 1 est une vue latérale schématique d'un dispositif conforme à l'invention, sur laquelle le déflecteur est représenté dans trois positions différentes, référencées (a), (b) et (c);
- la figure 2 est une vue en coupe partielle d'un dispositif conforme à l'invention, la coupe étant réalisée transversalement au véhicule et le dispositif étant représenté dans sa moitié gauche par rapport au plan médian M;
- la figure 3 est une vue latérale d'un dispositif conforme à l'invention et des éléments de son environnement fonctionnel, ce dispositif et ces éléments étant représentés dans la configuration fermée du toit; et
- la figure 4 est une vue latérale du dispositif illustré à la figure 3 et représenté dans la configuration escamotée du toit.

Comme annoncé précédemment, l'invention concerne un dispositif de déflexion d'air destiné à équiper un véhicule dont le toit, formé d'un ou plusieurs éléments de toit, est ouvrant ou escamotable, c'est-à-dire susceptible d'adopter une configuration escamotée dans laquelle ce ou ces éléments de toit sont partiellement ou totalement escamotés vers l'arrière du véhicule, par exemple dans le coffre arrière.

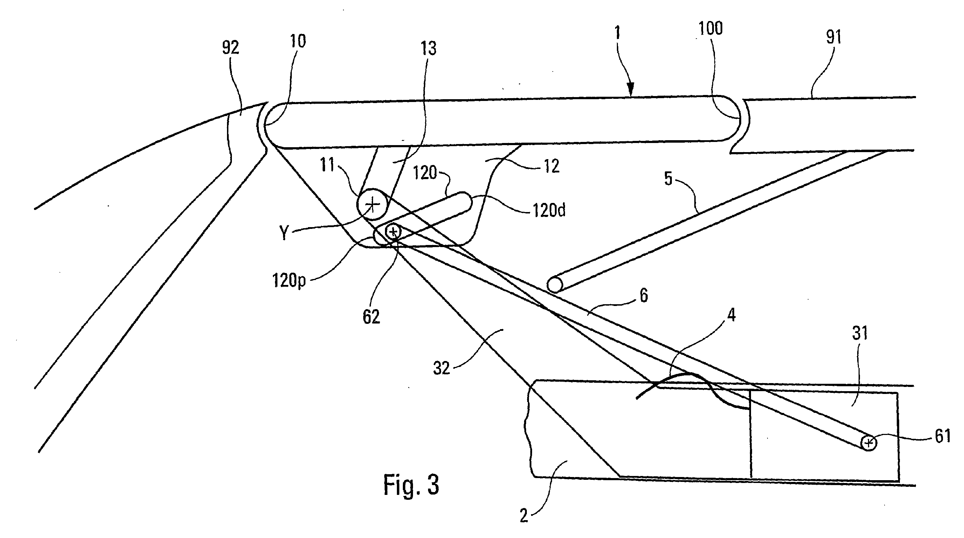

En revanche, dans la configuration fermée du toit, chaque élément de toit, et notamment l'élément de toit avant 91 représenté à la figure 3, surplombe l'habitacle qui se trouve ainsi totalement recouvert.

Le dispositif de l'invention comprend, de façon connue, un déflecteur 1 disposé entre une traverse de baie 92 du véhicule et l'élément de toit avant 91, ce déflecteur pouvant au moins adopter une position d'obturation et une position d'ouverture.

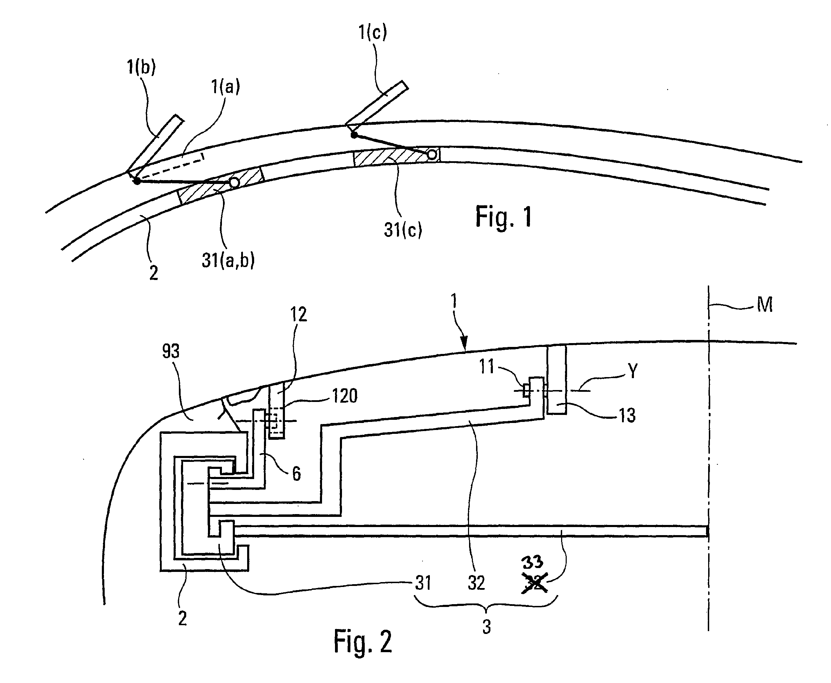

Dans sa position d'obturation, qui correspond à la configuration fermée du toit et qui est illustrée sur la figure 1 par la position (a) et sur la figure 3, le déflecteur 1 est dans une position sensiblement horizontale et participe à la constitution du toit.

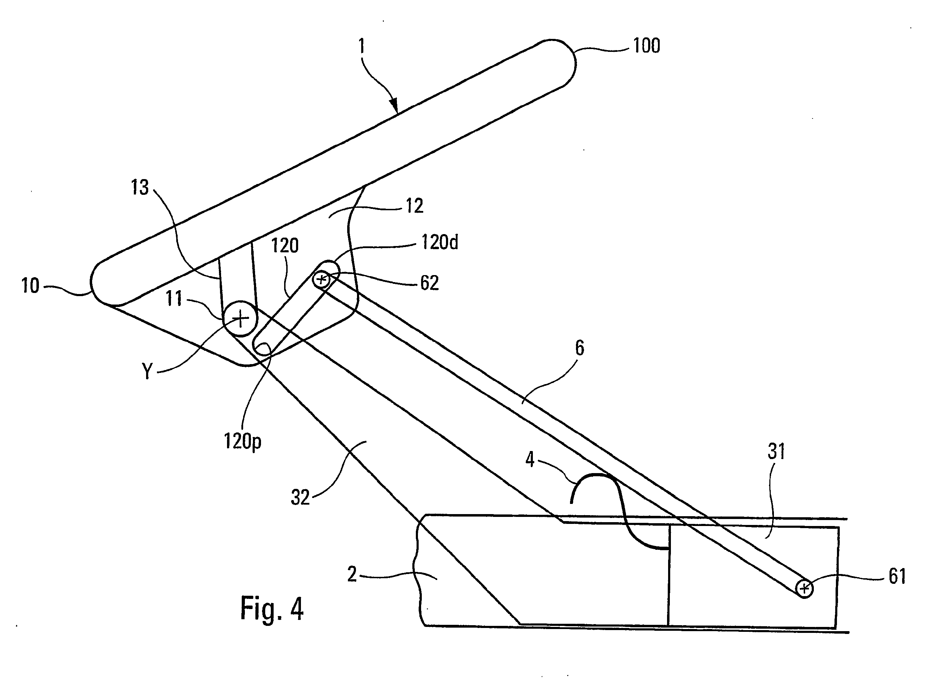

Lorsque les éléments de toit sont au moins partiellement escamotés, par exemple lorsque l'élément de toit avant 91 est superposé à l'élément de toit intermédiaire (non représenté), le déflecteur 1 (figure 1) passe de sa position sensiblement horizontale (a) à une position d'ouverture (b) dans laquelle il est incliné vers l'arrière et vers le haut du véhicule par rotation autour d'un axe de pivotement horizontal Y (figure 4) disposé du côté du bord avant 10 de ce déflecteur 1.

Selon un aspect essentiel de l'invention, le dispositif de déflexion d'air qui en fait l'objet est conçu pour permettre au déflecteur 1, en position ouverte c'est-à-dire incliné suivant un angle par exemple constant, d'adopter plusieurs positions de translation suivant une direction longitudinale du véhicule pour offrir une meilleure déviation de flux d'air, et de prendre notamment la position repérée par la référence (c) sur la figure 1.

Pour ce faire, ce dispositif comprend des glissières longitudinales 2 droite et gauche, disposées symétriquement à droite et à gauche du plan longitudinal médian M du véhicule, et un chariot 3 visible sur la figure 2.

Chaque glissière 2 est solidaire du brancard 93, lequel reste fixe lorsque les éléments de toit sont en position escamotée ou semi-escamotée dans le coffre arrière du véhicule.

Le chariot 3 est équipé d'organes de déplacement 31 et supporte le déflecteur 1 à rotation autour de l'axe de pivotement Y.

Les organes de déplacement lient le chariot 3 aux glissières 2, et permettent de déplacer à volonté ce chariot le long de ces glissières.

Par exemple, les organes de déplacement sont constitués de patins (que l'on pourrait également dénommer coulisseaux ou éléments de glissière) droit et gauche 31 respectivement guidés par les glissières 2 sur les côtés droit et gauche du véhicule.

Le déflecteur 1 comporte des pattes droite et gauche 13, faisant saillie de la face interne de ce déflecteur, et portant des pivots respectifs 11 droit et gauche.

Ces pivots 11 sont respectivement reçus à rotation autour de l'axe de pivotement Y dans des bras droit et gauche 32 qui font partie intégrante du chariot 3 et auxquels sont respectivement fixés les patins droit et gauche 31.

Comme le montre également la figure 2, le chariot 3 comprend par ailleurs une traverse de liaison 33 qui relie entre eux, directement ou par l'intermédiaire des bras 32, les patins droit et gauche 31, et qui permet de déplacer le chariot 3 sur les glissières 2.

Le déflecteur 1 comporte, faisant saillie de sa face interne, des voiles longitudinaux droit et gauche 12 respectivement disposés verticalement à droite et à gauche du plan médian M du véhicule, à plus grande distance de ce plan que les pattes 13.

Ces voiles longitudinaux droit et gauche 12 portent des cames 120 respectives, par exemple constituées par des lumières respectivement pratiquées dans ces voiles, et symétriques l'une de l'autre par rapport au plan médian M.

Chacune des cames 120 définit un trajet qui se rapproche continûment de l'axe de pivotement Y depuis son extrémité distale 120d, relativement éloignée de l'axe Y, jusqu'à son extrémité proximale 120p, relativement proche de cet axe (voir figure 3).

Le dispositif de l'invention comprend par ailleurs des organes de liaison 6 qui relient les cames 120 au chariot 3 pour définir la position ouverte ou fermée du déflecteur 1, ces organes de liaison prenant, dans le mode de réalisation illustré, la forme de biellettes droite et gauche 6 symétriques l'une de l'autre par rapport au plan médian M.

Chaque biellette 6 présente une extrémité inférieure 61 articulée sur le patin 31 correspondant, et une extrémité supérieure 62 guidée par la came 120 correspondante.

Le dispositif comprend également des organes de maintien 5 liés à l'élément de toit avant 91 et prenant par exemple la forme de barres de maintien droite et gauche 5 solidaires de cet élément de toit, ces organes de maintien étant destinés à appuyer respectivement sur les biellettes droite et gauche 6 dans la configuration fermée du toit pour maintenir le déflecteur 1 dans sa position d'obturation.

Pour ce faire, les barres de maintien 5 repoussent les biellettes 6 dans un sens propre à maintenir leurs extrémités supérieures 62 au voisinage des extrémités proximales 120p des trajets définis par les cames correspondantes 120, c'est-à-dire plus près de ces extrémités 120p que des extrémités distales 120d.

La force qu'exercent les barres de maintien 5 s'oppose à une force de rappel élastique exercée par un ou plusieurs organes élastiques 4 et qui sollicite au contraire les biellettes 6 dans un sens propre à maintenir leurs extrémités supérieures 62 à distance relative des extrémités proximales 120p des trajets définis par les cames correspondantes 120, c'est-à-dire plus près des extrémités distales 120d que de ces extrémités proximales 120p.

Les organes élastiques 4 prennent par exemple la forme de lames ressorts droite et gauche 4 respectivement fixées aux patins 31 correspondants, et en appui sur les biellettes 6 correspondantes.

Ces lames ressorts, qui sont ainsi soumises à une précontrainte variable, maximale dans la configuration fermée du toit, sollicitent en permanence le déflecteur 1 en rotation autour de son axe de pivotement Y, vers sa position d'ouverture.

Le fonctionnement du dispositif de l'invention est le suivant.

Lorsque le toit est fermé, l'élément de toit avant 91 adopte la position sensiblement horizontale illustrée à la figure 3. Dans cette position, les barres de maintien 5 dont cet élément de toit est doté repoussent vers le bas les extrémités supérieures 62 des biellettes 6 à l'encontre de la force de rappel exercée par les lames ressorts 4, de sorte que le déflecteur 1 est maintenu en position d'obturation, son bord avant 10 étant en contact avec la traverse de baie 92 et son bord arrière 100 étant en contact avec le bord avant de l'élément de toit avant 91.

Lorsque l'élément de toit avant 91 s'escamote (s'ouvre par mouvement vers l'arrière) dans une quelconque position, les barres de maintien 5 libèrent les biellettes 6 qui, sous la sollicitation des lames ressorts 4, pivotent autour de leurs extrémités inférieures 61 et font elles-mêmes pivoter le déflecteur 1 autour de l'axe Y jusque dans sa position d'ouverture illustrée à la figure 4. Après avoir atteint sa position d'ouverture, le déflecteur 1 peut, par déplacement du chariot 3 le long des glissières 2, être entraîné dans le sens longitudinal du véhicule jusqu'à adopter une position dans laquelle il assure une déflexion optimale du flux d'air qui risquerait autrement de gêner les passagers du véhicule.

Ainsi, un aspect de l'invention concerne un procédé de déflexion d'air sur un véhicule dont l'habitacle est sélectivement recouvert par un toit ouvrant du type précité et selon lequel :
- lorsque le toit est fermé, l'élément de toit avant 91 adopte la position sensiblement horizontale et le déflecteur 1 est maintenu en position d'obturation ( de préférence à l'encontre de la force de rappel déjà évoquée), de sorte que son bord avant est en contact avec la traverse de baie et son bord arrière avec le bord avant de l'élément de toit avant 91,
- lorsque cet élément de toit avant s'ouvre par mouvement vers l'arrière, le déflecteur pivote (de préférence naturellement) autour de l'axe Y jusque dans sa position d'ouverture et, après avoir atteint cette position, il peut (ici par déplacement de son moyen d'entraînement et de guidage 2, 3) être donc entraîné vers l'arrière, dans le sens longitudinal du véhicule, jusqu'à adopter une position dans laquelle il assure ladite « déflexion optimale du flux d'air ».

Comme le comprendra aisément l'homme de métier à la lecture de ce qui précède, il est possible de prévoir, en plus des moyens spécifiquement décrits, une motorisation pour assurer le déplacement du déflecteur dans le sens longitudinal du véhicule, et des systèmes de verrouillage pour maintenir le déflecteur dans l'une quelconque de ses positions.

Bien que la description qui précède ait été faite avec des traverses latérales de limites de carrosserie fixes (brancards 93 fixes limitant longitudinalement à gauche et à droite l'ouverture de toit et la zone de déplacement longitudinal de ce toit), des brancards amovibles ou mobiles longitudinalement, suivant l'axe X du véhicule, pourraient être prévus, en substitution (en particulier brancards retirables de la carrosserie ou brancards escamotables dans le coffre, avec les éléments rigides de toit).

## Revendications

1. Dispositif de déflexion d'air pour un véhicule dont l'habitacle est sélectivement recouvert par un toit ouvrant formé d'au moins un premier élément de toit (91) surplombant l'habitacle dans une configuration fermée du toit, et partiellement ou totalement escamoté vers l'arrière du véhicule dans une configuration escamotée du toit, ce dispositif comprenant :
- un déflecteur (1) disposé entre une traverse de baie (92) du véhicule et le premier élément de toit (91), ce déflecteur (1) adoptant sélectivement une position d'obturation dans laquelle il participe à la constitution du toit dans sa configuration fermée, et une position d'ouverture, qu'il adopte dans la configuration escamotée du toit et dans laquelle il est incliné vers le haut et vers l'arrière du véhicule par rotation autour d'un axe de pivotement horizontal (Y) disposé du côté d'un bord avant (10) de ce déflecteur,
- des glissières longitudinales (2) droite et gauche disposées symétriquement à droite et à gauche d'un plan longitudinal médian (M) du véhicule, **caractérisé en ce qu'**en position d'ouverture le déflecteur (1) peut adopter plusieurs positions de translation suivant une direction longitudinale du véhicule, par déplacement le long des glissières longitudinales (2) ; par l'intermédiaire d'un chariot (3) équipé d'organes de déplacement (31) et supportant ledit déflecteur (1) à rotation autour de l'axe de pivotement horizontal (Y), les organes de déplacement (31) liant le chariot (3) aux glissières (2) et permettant sélectivement ledit déplacement longitudinal de ce chariot, et donc du déflecteur, le long des glissières.

2. Dispositif de déflexion d'air suivant la revendication 1, **caractérisé en ce que** le chariot (3) comprend des bras droit et gauche (32) recevant respectivement des pivots droit et gauche (11) du déflecteur (1) à rotation autour de l'axe de pivotement (Y).

3. Dispositif de déflexion d'air suivant la revendication 2, **caractérisé en ce que** les organes de déplacement (31) comprennent des patins droit et gauche (31), respectivement guidés par les glissières droite et gauche (2) et solidaires des bras droit et gauche (32) du chariot (3), et **en ce que** ce chariot (3) comprend une traverse de liaison (33) reliant les patins droit et gauche (31) entre eux.

4. Dispositif de déflexion d'air suivant l'une quelconque des revendications précédentes, **caractérisé en ce qu'**il comprend au moins un organe élastique (4) soumis à une précontrainte variable et sollicitant le déflecteur (1) en rotation autour de l'axe de pivotement (Y) vers sa position d'ouverture, et **en ce que** ce dispositif comprend des organes de maintien (5) liés au premier élément de toit (91) et qui, dans la configuration fermée du toit, placent le déflecteur (1) dans sa position d'obturation et soumettent l'organe élastique (4) à sa précontrainte maximale.

5. Dispositif de déflexion d'air suivant la revendication 4, **caractérisé en ce que** le déflecteur (1) comporte des voiles longitudinaux droit et gauche (12), respectivement disposés verticalement à droite et à gauche du plan médian (M) du véhicule et portant des cames droite et gauche (120) respectives et symétriques par rapport au plan médian (M), **en ce que** chacune des cames (120) définit un trajet présentant une extrémité distale (120d) relativement éloignée de l'axe de pivotement (Y) et une extrémité proximale (120p) relativement proche de l'axe de pivotement (Y), ce trajet se rapprochant continûment de l'axe de pivotement (Y) depuis son extrémité distale (120d) jusqu'à son extrémité proximale (120p), et **en ce que** le dispositif comprend des organes de liaison (6) reliant les cames (120) au chariot (3) pour définir la position du déflecteur (1).

6. Dispositif de déflexion d'air suivant la revendication 5, **caractérisé en ce que** les organes de liaison (6) comprennent des biellettes droite et gauche (6), symétriques l'une de l'autre par rapport au plan médian (M), chaque biellette (6) présentant une première extrémité (61) articulée sur l'un des organes de déplacement (31) et une deuxième extrémité (62) guidée par l'une des cames (120), et **en ce que** les organes de maintien (5), dans la position d'obturation du déflecteur (1), appuient sur les biellettes droite et gauche (6) dans un sens propre à maintenir leurs deuxièmes extrémités respectives (62) à proximité relative des extrémités proximales respectives (120p) des trajets définis par les cames droite et gauche respectives (120).

7. Dispositif de déflexion d'air suivant la revendication 4 ou 6, **caractérisé en ce que**, comprenant des organes de liaison (6) reliant les cames (120) au chariot (3) pour définir la position du déflecteur (1), le dispositif comprend également des organes élastiques droit et gauche (4) sollicitant les organes de liaison (6) dans un sens propre à maintenir des extrémités respectives (62) de ces organes à distance relative des extrémités proximales respectives (120p) des trajets définis par les cames droite et gauche respectives (120), et à placer corrélativement le déflecteur (1) dans sa position d'ouverture.

8. Dispositif de déflexion d'air suivant l'une quelconque des revendications 6 et 7, **caractérisé en ce que** les organes de maintien (5) comprennent des barres de maintien droite et gauche (5), solidaires du premier élément de toit (91) et propres à appuyer respectivement sur les biellettes droite et gauche (6) dans la configuration fermée du toit.

9. Dispositif de déflexion d'air suivant l'une quelconque des revendications précédentes combinée à la revendication 5, **caractérisé en ce que** les cames droite et gauche (120) sont constituées par des lumières respectivement pratiquées dans les voiles longitudinaux droit et gauche (12) du déflecteur (1).

10. Dispositif de déflexion d'air suivant l'une quelconque des revendications précédentes combinée aux revendications 2 et 5, **caractérisé en ce que** le déflecteur (1) comporte des pattes droite et gauche (13) portant respectivement les pivots droit et gauche (11), ces pattes (13) étant plus proches du plan médian (M) que les voiles longitudinaux droit et gauche (12) du déflecteur (1).

11. Véhicule équipé du dispositif de déflexion d'air suivant l'une quelconque des revendications précédentes.

12. Procédé de déflexion d'air, par un déflecteur (1), sur un véhicule dont l'habitacle est sélectivement recouvert par un toit ouvrant formé d'au moins un premier élément de toit (91) surplombant l'habitacle dans une configuration fermée du toit, et partiellement ou totalement escamoté vers l'arrière du véhicule dans une configuration escamotée du toit, le déflecteur (1) adoptant sélectivement une position d'obturation dans laquelle il participe à la constitution du toit dans sa configuration fermée, et une position d'ouverture, qu'il adopte dans la configuration escamotée du toit et dans laquelle il est incliné vers le haut et vers l'arrière du véhicule par rotation autour d'un axe de pivotement horizontal (Y) disposé du côté d'un bord avant (10) de ce déflecteur,
lorsque le toit est fermé, ledit premier élément de toit (91) adoptant une position sensiblement horizontale et le déflecteur (1) étant maintenu en position d'obturation, **caractérisé en ce que**:
- lorsque ce premier élément de toit (91) s'ouvre en direction de la configuration escamotée, par mouvement vers l'arrière du véhicule, le déflecteur pivote autour dudit axe horizontal (Y) jusque dans sa position d'ouverture et, après avoir atteint cette position, est entraîné longitudinalement en translation vers l'arrière du véhicule, jusqu'à adopter une position favorable à une déflexion du flux d'air.

13. Procédé selon la revendication 12, **caractérisé en ce que** lorsque le toit est fermé, on dispose le déflecteur (1) entre une traverse de baie (92) du véhicule et le premier élément de toit (91), et on place son bord avant en contact avec la traverse de baie (92) et son bord arrière avec le bord avant de ce premier élément de toit (91).

14. Procédé selon la revendication 12 ou 13, **caractérisé en ce que** :
- lorsque le toit est fermé, le déflecteur (1) est maintenu en position d'obturation à l'encontre d'une force de rappel,
- et, lorsque ledit premier élément de toit (91) s'ouvre vers la configuration escamotée, le déflecteur pivote naturellement.

## Claims

1. An air-deflecting device for a vehicle, the passenger compartment of which is selectively covered by a retractable roof made up of at least one roof element (91) which overhangs the passenger compartment in a closed configuration of the roof and is partly or fully retracted towards the rear of the vehicle in a retracted configuration of the roof, said device comprising:
- a deflector (1) disposed between a windscreen cross-member (92) of the vehicle and the first roof element (91), said deflector (1) selectively adopting a closing position, in which it contributes towards formation of the roof in its closed configuration, and an opening position, which it adopts in the retracted configuration of the roof and in which it is inclined upwards and towards the rear of the vehicle by rotation about a horizontal pivoting axis (Y) disposed in the region of a front edge (10) of said deflector,
- right- and left-hand longitudinal guide rails (2) disposed symmetrically on the right- and left-hand sides of the longitudinal median plane (M) of the vehicle, **characterized in that**, in the opening position, the deflector (1) can adopt a number of translational positions in longitudinal direction of the vehicle by displacement along longitudinal guide rails (2); through the intermediary of a carriage (3) which is equipped with displacement members (31) and supports said deflector (1) for rotation about the horizontal pivoting axis (Y), the displacement members (31) linking the carriage (3) to the guide rails (2) and selectively allowing said longitudinal displacement of said carriage, and thus of the deflector, along the guide rails.

2. An air-deflecting device according to Claim 1, **characterized in that** the carriage (3) comprises right-hand and left-hand arms (32) respectively receiving right-hand and left-hand pivots (11) of the deflector (1) for rotation about the pivoting axis (Y).

3. An air-deflecting device according to Claim 2, **characterized in that** the displacement members (31) comprise right-hand and left-hand runners (31), which are guided by the right-hand and left-hand guide rails (2) respectively, and are integral with the right-hand and left-hand arms (32) of the carriage (3), and **in that** said carriage (3) includes a connecting crosspiece (33) which joins together the right-hand and left-hand runners (31).

4. An air-deflecting device according to any one of the preceding claims, **characterized in that** it has at least one resilient member (4), which is subjected to variable pre-stressing and rotationally biases the deflector (1) about the pivoting axis (Y) towards its opening position, and **in that** said device includes holding members (5) which are linked to the first roof element (91) and which, when the roof is in its closed configuration, place the deflector (1) in its closing position and subject the resilient member (4) to its maximum pre-stress.

5. An air-deflecting device according to Claim 4, **characterized in that** the deflector (1) has right-hand and left-hand longitudinal netting (12), disposed vertically on the right- and left-hand sides respectively of the median plane (M) of the vehicle and bearing respective right-hand and left-hand cams (120) which are symmetrical relative to the median plane (M), **in that** each of the cams (120) defines a path having a distal end (120d) relatively far away from the pivoting axis (Y) and a proximal end (120p) relatively close to the pivoting axis (Y), said path continuously drawing closer to the pivoting axis (Y) from its distal end (120d) to its proximal end (120p), and **in that** the device has connecting members (6) linking the cams (120) to the carriage (3) for defining the position of the deflector (1).

6. An air-deflecting device according to Claim 5, **characterized in that** the connecting members (6) comprise right-hand and left-hand connecting rods (6), symmetrical with one another relative to the median plane (M), each connecting rod (6) having a first end (61) hinged to one of the displacement members (31) and a second end (62) guided by one of the cams (120), and **in that** the holding members (5), when the deflector (1) is in its closing position, bear against the right-hand and left-hand connecting rods (6) in a direction suited to holding their second respective ends (62) relatively close to the respective proximal ends (120p) of the paths defined by the respective right-hand and left-hand cams (120).

7. An air-deflecting device according to Claim 4 or 6, **characterized in that**, having connecting members (6) linking the cams (120) to the carriage (3) for defining the position of the deflector (1), the device also comprises right-hand and left-hand resilient members (4) urging the connecting members (6) in a direction suited to holding the respective ends (62) of said members relatively far away from the respective proximal ends (120p) of the paths defined by the respective right-hand and left-hand cams (120) and to placing the deflector (1) in its corresponding opening position.

8. An air-deflecting device according to either one of Claims 6 or 7, **characterized in that** the holding members (5) comprise right-hand and left-hand holding bars (5), integral with the first roof element (91) and suitable for bearing against the right-hand and left-hand connecting rods (6) respectively, when the roof is in its closed configuration.

9. An air-deflecting device according to any one of the preceding claims combined with Claim 5, **characterized in that** the right-hand and left-hand cams (120) are formed by slots made respectively in the right-hand and left-hand longitudinal netting (12) of the deflector (1).

10. An air-deflecting device according to any one of the preceding claims combined with Claims 2 and 5, **characterized in that** the deflector (1) has right-hand and left-hand lugs (13) bearing the right-hand and left-hand pivots (11) respectively, said lugs (13) lying closer to the median plane (M) than the right-hand and left-hand longitudinal netting (12) of the deflector (1).

11. A vehicle fitted with the air-deflecting device according to any one of the preceding claims.

12. A method of deflecting air, by a deflector (1), over a vehicle, the passenger compartment of which is selectively covered by a retractable roof made up of at least one first roof element (91) which overhangs the passenger compartment when the roof is in its closed configuration, and which is partly or fully retracted towards the rear of the vehicle when the roof is in its retracted configuration, the deflector (1) selectively adopting a closing position, in which it contributes towards formation of the roof in its closed configuration, and an opening position which it adopts in the retracted configuration of the roof and in which it is inclined upwards and towards the rear of the vehicle by rotation about a horizontal pivoting axis (Y) disposed in the region of a front edge (10) of said deflector when the roof is closed, said first roof element (91) adopting a substantially horizontal position and the deflector (1) being held in the closing position, **characterized in that**:
- when said first roof element (91) opens in direction of the retracted configuration, by moving towards the rear of the vehicle, the deflector pivots about said horizontal axis (Y) until it is in its opening position and, on reaching this position, is carried longitudinally in translation towards the rear of the vehicle until it assumes a position favourable to deflecting the flow of air.

13. A method according to Claim 12, **characterized in that**, when the roof is closed, the deflector (1) is disposed between a windscreen cross-member (92) of the vehicle and the first roof element (91), and its front edge is placed in contact with the windscreen cross-member (92) and its rear edge with the front edge of said first roof element (91).

14. A method according to Claim 12 or 13, **characterized in that**:
- when the roof is closed, the deflector (1) is held in the closing position against a return or restoring force,
- and, when said first roof element (91) opens towards the retracted configuration, the deflector pivots naturally.

## Patentansprüche

1. Luftablenkvorrichtung für ein Fahrzeug, dessen Fahrgastraum durch ein Schiebedach selektiv abgedeckt ist, welches aus wenigstens einem ersten Dachelement (91) gebildet ist, das in einer geschlossenen Konfiguration des Daches aus dem Fahrgastraum herausragt und in einer zurück gezogenen Konfiguration des Daches teilweise oder ganz zur Heckseite des Fahrzeugs zurückgezogen ist, wobei diese Vorrichtung umfasst:
- ein Luftablenkelement (1), das zwischen einem Fensterquerträger (92) des Fahrzeugs und dem ersten Dachelement (91) angeordnet ist, wobei das Luftablenkelement (1) wahlweise annimmt eine Verschlussstellung, in welcher dieses an der Konstitution des Daches in seiner geschlossenen Konfiguration partizipiert, und eine Öffnungsstellung, die dieses in der zurückgezogenen Konfiguration des Daches annimmt und in welcher dieses schräg nach oben und zur Heckseite des Fahrzeugs durch eine Drehung um eine horizontale Drehachse (Y) ausgestellt ist, die an der Seite einer Vorderkante (10) des Luftleitelements angeordnet ist,
- eine rechte und linke Längsschiene (2), die symmetrisch rechts und links einer Mittellängsebene (M) des Fahrzeugs angeordnet sind, **dadurch gekennzeichnet, dass** in einer Öffnungsstellung das Luftablenkelement (1) mehrere Übergangsstellungen in einer Längsrichtung des Fahrzeugs durch Verschiebung entlang der Längsschienen (2) annehmen kann; mithilfe eines Schlittens (3), der mit Verschiebeelementen (31) ausgestattet ist und das Luftablenkelement (1) bei der Drehung um die horizontale Drehachse (Y) trägt, wobei die Verschiebeelemente (31) den Schlitten (3) mit den Schienen (2) verbinden und die Längsverschiebung des Schlittens und somit des Luftablenkelements entlang der Schienen selektiv erlauben.

2. Luftablenkvorrichtung nach Anspruch 1, **dadurch gekennzeichnet, dass** der Schlitten (3) einen rechten und linken Arm (32) aufweist, der jeweils einen rechten und linken Drehzapfen (11) des Luftablenkelements (1) bei Drehung um die Drehachse (Y) aufnimmt.

3. Luftablenkvorrichtung nach Anspruch 2, **dadurch gekennzeichnet, dass** die Verschiebeelemente (31) einen rechten und linken Gleitschuh (31) umfassen, die jeweils durch die rechte und linke Gleitschiene (3) geführt werden und mit dem rechten und linken Arm (32) des Schlittens (3) fest verbunden sind, und dass der Schlitten (3) eine Verbindungstraverse (33) umfasst, welche den rechten und linken Gleitschuh (31) miteinander verbindet.

4. Luftablenkvorrichtung nach einem der vorhergehenden Ansprüche, **dadurch gekennzeichnet, dass** diese wenigstens ein elastisches Element (4) umfasst, das einer variablen Vorspannung ausgesetzt ist und das Luftablenkelement (1) bei Drehung um die Drehachse (Y) in ihrer Öffnungsposition festsetzt, und dass diese Vorrichtung Halteelemente (5) aufweist, die mit dem ersten Dachelement (91) verbunden sind und die in der geschlossenen Konfiguration des Daches das Luftablenkelement (1) in seine Verschlussstellung bringt und das elastische Element (4) seiner maximalen Vorspannung aussetzt.

5. Luftablenkvorrichtung nach Anspruch 4, **dadurch gekennzeichnet, dass** das Luftablenkelement (1) einen rechten und linken Längsflügel (12) umfasst, die jeweils vertikal rechts und links der Mittelebene (M) des Fahrzeugs angeordnet sind und jeweils einen rechten und linken Nocken (120) und symmetrisch in Bezug zur Mittelebene (M) tragen, dass jeder Nocken (120) eine Bewegungsbahn bildet, die ein distales Ende (120d) relativ entfernt von der Drehachse (Y) und ein proximales Ende (120p) relativ nahe an der Drehachse (Y) aufweist, wobei diese Bewegungsbahn sich kontinuierlich der Drehachse (Y) von seinem distalen Ende (120d) bis zu seinem proximalen Ende (120p) nähert, und dass die Vorrichtung Verbindungselemente (6) aufweist, welches die Nocken (120) des Schlittens (3) verbindet, um die Position des Luftablenkelement (1) zu bilden.

6. Luftablenkvorrichtung nach Anspruch 5, **dadurch gekennzeichnet, dass** die Verbindungselemente (6) eine rechtes und ein linkes Verbindungsglied (6) aufweisen, symmetrisch zueinander in Bezug zu der Mittelelemente (M), wobei jedes Verbindungsglied (6) aufweist ein erstes Ende (61), das an dem Verschiebungselement (31) angelenkt ist, und ein zweites Ende (62), das durch einen der Nocken (120) geführt wird, und dass die Halteelemente (5) in der Verschlussstellung des Luftablenkelements (1) an das rechte und linke Verbindungsglied (6) in einer solchen Richtung anstoßen, dass ihre jeweiligen zweiten Enden (62) in relativer Nähe zu den jeweiligen proximalen Enden (120p) der Bewegungsbahnen gehalten werden, die durch jeweils den rechten und linken Nocken (120) gebildet werden.

7. Luftablenkvorrichtung nach Anspruch 4 oder 6, **dadurch gekennzeichnet, dass**, umfassend die Verbindungsglieder (6), welche die Nocken (120) mit dem Schlitten (3) verbinden, um die Stellung des Luftablenkelements (1) zu bilden, die Vorrichtung auch ein rechtes und linkes elastisches Element (4) umfasst, welche die Verbindungsglieder (6) derart beanspruchen, dass die jeweiligen Enden (62) dieser Elemente in einer relativen Entfernung von den jeweiligen proximalen Enden (120p) der durch die den jeweiligen rechten und linken Nocken (120) gebildeten Bewegungsbahnen gehalten werden und das Luftablenkelement (1) in seiner Öffnungsstellung korrelativ angeordnet wird.

8. Luftablenkvorrichtung nach einem der Ansprüche 6 und 7, **dadurch gekennzeichnet, dass** die Halteelemente (5) eine rechte und linke Haltestange (5) umfassen, die mit dem ersten Dachelement (91) fest verbunden ist und jeweils auf dem rechten und linken Verbindungsglied (6) in der geschlossenen Konfiguration des Daches anliegen kann.

9. Luftablenkvorrichtung nach einem der vorhergehenden Ansprüche, kombiniert mit Anspruch 5, **dadurch gekennzeichnet, dass** der rechte und linke Nocken (120) durch Öffnungen gebildet werden, die jeweils im rechten und linken Längsflügel (12) des Luftablenkelements (1) ausgebildet sind.

10. Luftablenkvorrichtung nach einem der vorhergehenden Ansprüche, kombiniert mit den Ansprüchen 2 und 5, **dadurch gekennzeichnet, dass** das Luftablenkelement (1) einen rechten und linken Fuß (13) umfasst, der jeweils den rechten und linken Drehzapfen (11) trägt, wobei diese Füße (13) näher an der Mittelebene (M) sind als der rechte und linke Längsflügel (12) des Luftablenkelements (1).

11. Fahrzeug, ausgestattet mit der Luftablenkvorrichtung nach einem der vorhergehenden Ansprüche.

12. Verfahren zur Ablenkung von Luft mit einem Luftablenkelement (1) auf einem Fahrzeug, dessen Fahrgastraum selektiv durch ein Schiebedach abgedeckt ist, dass aus wenigstens einem Dachelement (91) gebildet wird, das in einer geschlossenen Konfiguration des Daches über den Fahrgastraum herausragt und in einer zurückgezogenen Konfiguration des Daches teilweise oder ganz zur Heckseite des Fahrzeugs zurückgezogen ist, wobei das Luftablenkelement (1) selektiv eine Verschlussstellung annimmt, in welcher dieses an der Konstitution des Daches in seiner geschlossenen Konfiguration partizipiert, und eine Öffnungsstellung, welche dieses in der zurückgezogenen Konfiguration des Daches annimmt und in welcher dieses nach oben und zur Heckseite des Fahrzeugs durch Drehung um eine horizontale Drehachse (Y) schräg ausgestellt ist, die an der Seite einer Vorderkante (10) des Luftablenkelements angeordnet ist, während das Dach geschlossen ist, wobei das erste Dachelement (91) eine im wesentlichen horizontale Stellung annimmt und das Luftablenkelement (1) in einer Verschlussposition gehalten wird, **dadurch gekennzeichnet, dass**:
- wenn sich das erste Dachelement (91) in Richtung der zurückgezogenen Konfiguration durch Bewegung zur Heckseite des Fahrzeugs öffnet, das Luftablenkelement um die horizontale Achse (Y) bis in seine Öffnungsstellung schwenkt und, nachdem diese Stellung erreicht worden ist, in Längsrichtung translatorisch zur Heckseite des Fahrzeugs angetrieben wird, bis dieses eine günstige Stellung für eine Ablenkung des Luftstromes annimmt.

13. Verfahren nach Anspruch 12, **dadurch gekennzeichnet, dass**, wenn das Dach geschlossen ist, das Luftablenkelement (1) zwischen einem Fensterquerträger (92) des Fahrzeugs und dem ersten Dachelement (91) angeordnet wird und seine Vorderkante in Kontakt mit dem Fensterquerträger (92) und seine Hinterkante mit der Vorderkante des ersten Dachelements (91) gebracht wird.

14. Verfahren nach Anspruch 12 oder 13, **dadurch gekennzeichnet, dass**:
- wenn das Dach geschlossen ist, das Luftablenkelement (1) in einer Verschlussstellung gegen eine Rückholkraft gehalten wird,
- und, wenn das erste Dachelement (91) sich in Richtung der zurückgezogenen Konfiguration öffnet, das Luftablenkelement natürlicherweise schwenkt.
